# EUROPEAN PATENT APPLICATION

(11) **EP 1 198 987 A1**
(43) Date of publication of application: **24.04.2002**
(21) Application number: 01308818.2
(22) Date of filing: 17.10.2001
(51) Int. Cl.: A01K 97/06, A01K 95/02

(54) **Storage and aligner device for split shot**

(30) Priority: 17.10.2000 GB 0025417
(71) Applicant: Preston, David, Much Wenlock, Shropshire TF13 6JR (GB)
(72) Inventor: Preston, David, Much Wenlock, Shropshire TF13 6JR (GB)
(74) Representative: Newell, William Joseph

(57) **Abstract**

A storage and aligner device for split shot (64) of a preset nominal size, having a split (66) therein comprises a container (10) for the split shot, a knife edge (46) of profile capable of being received within the split (66) of the split shot (64), a retaining means such as an aperture (34) for keeping the split shot pellet in movable relationship adjacent a knife edge (46) and perturbing means (36,50) for causing vibration such as to cause a non-aligned split shot (64) to align itself with the split (66) engaging the knife edge (46), so that the split shot (64) passes through and beyond the aperture (34) to a pick-up or presentation station (30).

## Description

This invention relates to a storage and aligner device for storing split shot type weights for angler's line and for presenting a split shot weight in alignment at a presentation station, ready for application to the line.

Anglers, particularly coarse anglers, often use split shot weights on their line to sink baited hooks, and to weigh down floats so that a required amount of these floats shows above water. Split shot are traditionally lead shot as used in shotguns but for environmental reasons, non-lead alternatives are often used. For convenience the term "split shot" is used to mean both traditional split lead shot and the non-lead alternatives available in the form of a part-split pellet.

Conventionally, the split shot is manually aligned with the split straddling the line at the required location and the shot squeezed to close the split over the line to anchor the shot in place. However, due to the small size of the shot and the split, it is often difficult to manipulate and align the shot to fix it onto the line, particularly with smaller sizes that can be a small as 1 mm in diameter and where there is poor light, or where the angler is wearing gloves.

The inventor has therefore identified a need for a device which offers a means of aligning even small split shot ready for application to the line, and preferably for picking up and fixing the shot to the line. In some instances, as a convenience for the angler and as a marketing aid, the device may be produced in a form that is sufficiently simple and inexpensive that it can be sold as a point-of-sale container for shot and be discarded when the shot is used up.

Previously, no economical, if any, solution has been proposed which uses already split shot in a device to help fix shot to line, because of the difficulty of aligning the split ready to accept the line on to it. There have been complicated arrangements, which take special un-split shot and cut them immediately prior to application onto the line.

Accordingly, in one aspect, this invention provides a storage and aligner device for split shot of a preset nominal size, having a split therein, said device comprising:
(i) a container for split shot;
(ii) knife edge of profile capable of being received at least partly within the split of a split shot pellet in use;
(iii) retaining means for retaining in use the split shot pellet in movable relationship adjacent said knife edge;
(iv) perturbing means for causing in use at least one of vibration of said split shot pellet and relative movement between said split shot pellet and said knife edge, sufficient in use to perturb a split shot pellet disposed with its split out of alignment with said knife edge into an aligned position in which said split is aligned with and straddles said knife edge, and
(v) means for thereafter presenting said split shot pellet in alignment at a presentation station.

In the above device the perturbation causes the split shot to move in pseudo-random manner until it finds a stable state in which it sits on said knife edge. The term "knife edge" is used broadly define an edge having a generally V-shaped profile generally complementary to the shape of the split in the shot. The profile need not necessarily be sharp edged.

The retaining means may keep the split shot loosely adjacent the knife edge whilst it is being perturbed and may take many forms. In a preferred embodiment the retaining means comprises an alignment aperture in the container, said aperture being sized to receive said split shot pellet with clearance and being positioned generally above the knife edge by a distance such that, when the split on the split shot pellet is aligned with and straddling the knife edge, the split shot may pass through and beyond said aperture, but when the split on said split shot pellet is not aligned with the knife edge, the split shot is retained within said aperture and prevented from passing therethrough by said knife edge. In this way, the split shot is retained in the aperture of the split shot container until the split aligns with the knife edge whereupon the split shot passes through and beyond the aperture.

The perturbing means preferably includes a ratchet or clicker mechanism for vibrating in use split shot in the vicinity of said aperture. The ratchet mechanism may be appropriately located anywhere on the device where the vibrations caused thereby are transmitted directly or indirectly to the split shot. In a particularly convenient arrangement, at least part of the ratchet or clicker mechanism is associated with a portion of the container, and a further part thereof is associated with a rotatable member on which said knife edge is provided. The vibration may therefore be imparted by the user gripping and rotating the rotatable member relative to the container.

Although the rotatable member could be movable in either direction, it is preferred that the ratchet or clicker mechanism operates to allow rotation of the rotatable member in one direction only.

Although in some instances the knife edge could be straight and some form of linear reciprocal movement used to generate the vibration, it is preferred for the knife edge to be generally circular and concentric with the axis of rotation of the rotatable member. By this arrangement, the knife edge follows a single arcuate path beneath the alignment aperture.

Preferably, the presentation station is provided adjacent said knife edge but at a location on the path of movement of a split shot aligned with and straddling a knife edge as it is carried by the knife edge in said one direction, after it has passed through and beyond the alignment aperture.

Although in some instances the device may be used simply to present the split shot in aligned fashion at a presentation station whereupon the line may be applied directly, it is preferred for the device to include a removable shot pick-up member at the presentation station, said pick-up member having a shot receiving portion for being placed in the path of said knife edge and arranged in use to intercept and receive in predetermined orientation a split shot carried downstream from said alignment aperture, said pick-up member being removable in use from said presentation station with the split shot removably received in said predetermined orientation. The pick-up member may have walls defining a blind shot stop passage or tunnel into which in use a split shot, aligned and straddling said knife edge, is carried from said alignment aperture on rotation of said rotatable member. The pick-up member may also include a line alignment slot, which extends up the pick-up member to define two legs which in use engage respective opposite sides of the split shot to either side of the shot split and to define in use a guide to introduce a portion of line into the split of the shot. The pick-up member may have a shot-gripping bore communicating with but extending generally transversely to said shot stop passage or tunnel, whereby in use a split shot on the knife edge passing towards or reaching the end of the shot stop passage may be gripped in use by moving the pick-up member towards the knife edge to force the split shot along the shot gripping bore. It will be appreciated that the pick-up member of the various forms described above is used to transfer the split shot with its split in known orientation from the device whereupon the line can be introduced into the split of the shot and the shot squeezed to close the split onto the line.

Although the pick-up member may have a visual cue which may be used to align the pick-up member at the required angle of orientation when replacing it into the device, in a preferred embodiment, the pick-up member is removably received in a non-circular bore, thereby to ensure that it is presented to the knife edge in a predetermined angular orientation.

In another aspect, this invention provides a method of aligning split shot for application to a fishing line which comprises:
(i) providing a supply of one or more split shot in a reservoir having a hole or passage through which split shot may pass;
(ii) providing beneath said hole a knife edge;
(iii) moving said knife edge beneath said hole; and
(iv) applying vibration to the shot by means of a clicking ratchet, whereby the shot is rolled and turned until the split in the shot is aligned with and straddles said knife edge, thereby allowing the shot to drop onto said knife edge.

Embodiments of this invention seek to solve the problem of aligning split shot using two principles:
(i) a moving knife edge under a hole in which the shot lies; and
(ii) vibration applied to the shot and assembly by means of a clicking ratchet in the device.

Both of these principles when implemented in embodiments of the invention roll and turn the shot so that the shot quickly finds itself aligned with the knife edge and the shot then drops onto the knife edge. Once the shot is aligned relative to the knife edge and therefore its housing, it can be picked up using a simple holding device which when pushed over the shot, grips it with friction and is ready to be placed on the line.

Finally, the holding device can be squeezed using the same fingers and thumb used to hold it, to fix the shot on to the line.

Whilst the invention has been described above, the invention extends to any inventive feature or combination of features set out in the following description or claims.

The invention may be performed in various ways, and, by way of example only, two specific embodiments will now be described in detail, reference being made to the accompanying drawings in which:-
Figure 1 is a side view of a first embodiment of shot storage and applicator device in accordance with this invention;
Figure 2 is a top plan view of the shot storage and applicator device of Figure 1;
Figure 3 is an underneath plan view on the shot storage and applicator device of Figures 1 and 2;
Figure 4 is a section view through the clear mid-portion of the device of Figures 1 to 3;
Figure 5 is a top plan view on the mid-portion of Figure 4;
Figure 6 is an underneath plan view on the mid-portion of Figures 4 and 5;
Figure 7 is a top plan view of the base of the first embodiment of shot storage and applicator device;
Figure 8 is a section view through part of the base of Figure 7 on lines VIII - VIII;
Figure 9 is a detailed view of the interaction of the pawl on the base portion with the splined or ratchet collar of the mid-portion;
Figure 10 is a side view of a pick-up peg for use in the first embodiment of a shot storage and applicator device;
Figure 11 is an end view on the upper end of the pick-up peg;
Figure 12 is a view on the bottom, shot- and line-engaging end, of the pick-up peg;
Figure 13(a) to (d) is a series of schematic views of the sequence of events as a split shot is aligned with the knife edge and then transferred in aligned fashion to the pick-up peg in the above embodiment;
Figure 14 is a general perspective view on one side of the bottom half of a second embodiment of shot storage and applicator device;
Figure 15 is a general perspective view on the side of the upper half of the second embodiment;
Figure 16 is a top view on the second embodiment of this invention;
Figure 17 is a detailed view showing the interrelation of a split shot straddled on the knife edge and engaging the shot stop in the second embodiment;
Figure 18 is a side view of a shot holder;
Figure 19 is a side view of the second embodiment in use with a split shot aligned and engaging the shot stop;
Figure 20 is a view of the shot holder having been withdrawn from the device with an aligned split shot contained therein;
Figure 21 shows how an aligned split shot held by the shot holder is applied to a fishing line;
Figure 22 is an underneath plan view of the top half of the pot showing the pawl of a ratchet or clicker mechanism; and
Figure 23 is a top plan view on the bottom half of the pot showing the protrusions forming the other part of the ratchet or clicker mechanism.

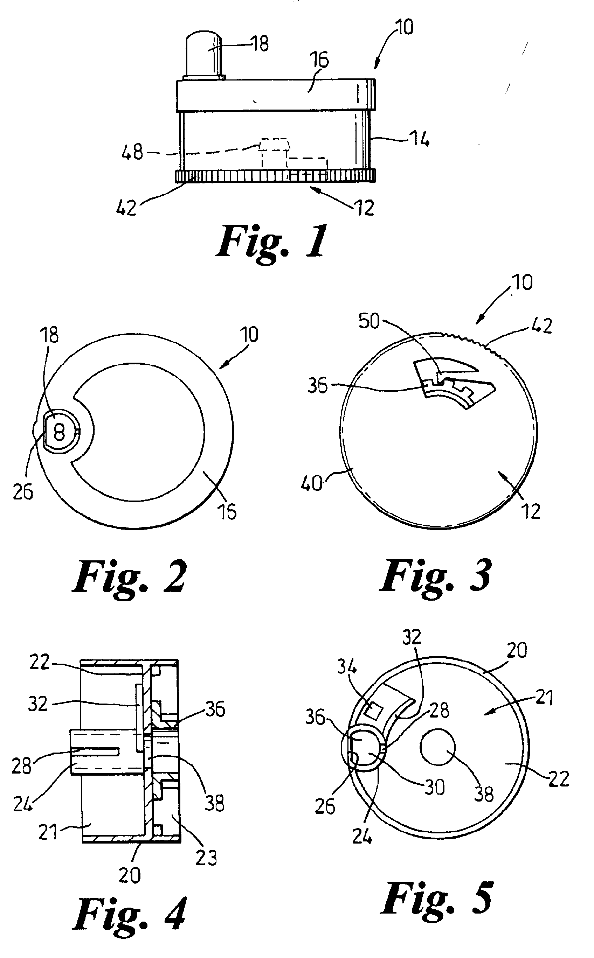

Referring initially to Figures 1 to 3, the shot storage and applicator device of this first embodiment comprises a container 10 made up of four main parts, namely a base 12, a mid portion 14, a lid 16 and a removable pick-up peg 18. This device is intended to store a supply of split shot and to be operable to present a single split shot to the pick-up peg 18 with the split of the shot in registration with a line guide on the pick-up peg.

Referring now to Figures 4 to 6, the mid portion 14 is made of a suitable clear plastics material such as, for example, high impact clear styrene, which allows the split shot contained in the device to be visible. The mid portion comprises a generally cylindrical outer wall 14 divided transversely between its ends by an intermediate wall 22 thereby dividing the mid-portion 14 into a shot storage region 21 and an alignment region 23. On the upper side of the intermediate wall, as seen in Figure 5, there projects upwardly a guide sleeve 24 for the pick-up peg 18, (not shown in this view). The guide sleeve has a flattened section 26 adjacent its merger with the cylindrical wall 20 and a slot 28 extending part-way down the sleeve (as seen more clearly in Figure 4). At the foot of the sleeve 24 is an aperture 30 extending through the intermediate wall 22, through which the lower part of the pick-up peg may project in use. An arcuate guide rib 32 upstands from the upper side of the wall 20 and runs generally concentric with the outer cylindrical wall 20 to define a catchment region for shot.

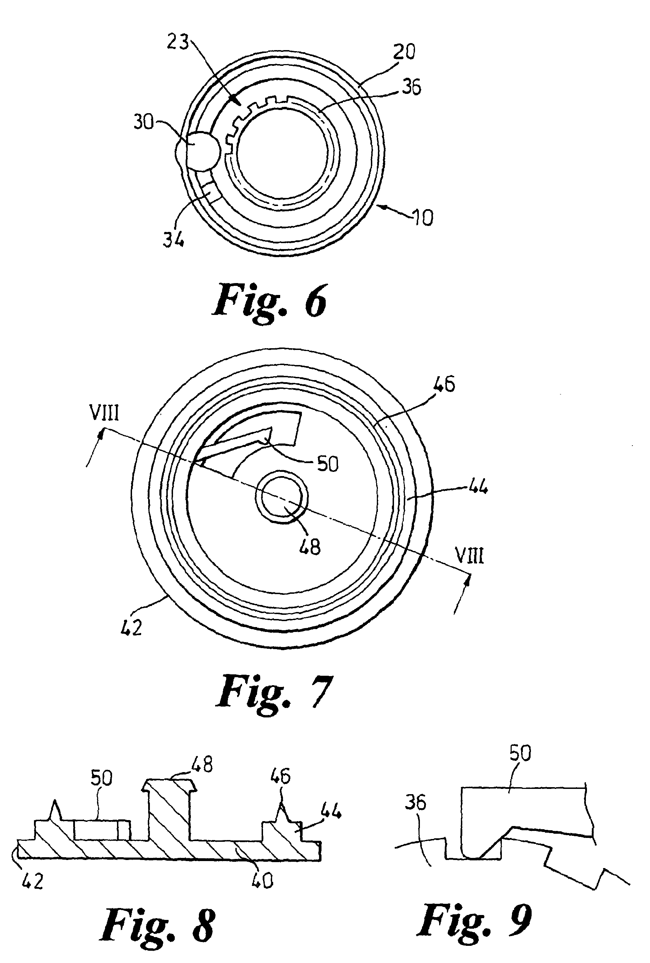

Located within the catchment region is a further aperture 34 through the intermediate wall 22, in this embodiment of square section, whose centre is at essentially the same radial distance as that of the aperture 30 at the foot of the guide sleeve 24. The further aperture 34 is designed having regard to the size of the split shot contained in the containment region 21, to allow passage of just one split shot at a time. Referring now to Figure 6, the underside of the intermediate wall 22 carries a cylindrical collar 36 having on the radially outer side thereof a series of splines or teeth to engage a sprung pawl on the base as to be described below. The intermediate wall 22 also includes a central fixing aperture 38 for attachment of the base portion 12, to be described below.

Referring now to Figures 3 and 7 to 9, the base 12 includes a base wall 40 of circular form having a toothed outer surface 42 for ease of gripping. Referring especially to Figures 7 and 8, upstanding from the base wall 40 is an annular rib 44 from which projects upwardly a concentric knife-edge 46. At the centre of the base wall 40 is a central fixing projection 48 which co-operates with the fixing aperture 38 in the mid-portion 14 to allow the base to be press fitted semi-permanently into engagement with the mid-portion 14 whilst allowing the base 12 to be rotated with respect to the mid-portion 14. Extending radially inwardly from the annular wall 44 is a ratchet pawl 50 which is of the same axial dimension as the annular wall 44. When the base is assembled to the mid-portion the pawl 50 co-operates with the splined or toothed cylindrical collar 36 whereby on rotation of the base relative to the mid-portion, the clicking action of the pawl 50 over the toothed or splined cylindrical collar 36 causes vibration. The vibration is transmitted to the base, and in particular to the knife edge 46, and via the cylindrical collar 36 to the intermediate wall 22 to cause the shot in the storage region to be vibrated thereby to cause a shot to drop into the further aperture 34.

The knife edge 46 is disposed such that, when the base and the mid-portion are assembled, it passes essentially beneath the aperture 34 and the guide sleeve 24 and separated from the lower surface of the aperture by a distance substantially less than the diameter of the split shot. The base may be moulded of suitable plastics material such as white polypropylene which may be reinforced with e.g. 30% glass fibre if required. Figure 9 shows a detail of the ratchet pawl 50 in engagement with the splined or toothed cylindrical collar 36.

The lid 16 as viewed in Figures 1 and 2 is of generally inverted tray form with a flat top surface and a depending skirt for being pushed fitted over the cylindrical outer wall of the mid-portion to close the split shot containment region 21. The lid 16 has a hole through which the upper end of the guide sleeve 24 marginally projects. The upper surface of the lid may carry useful identification of the particular size of the shot contained in the containment region 21.

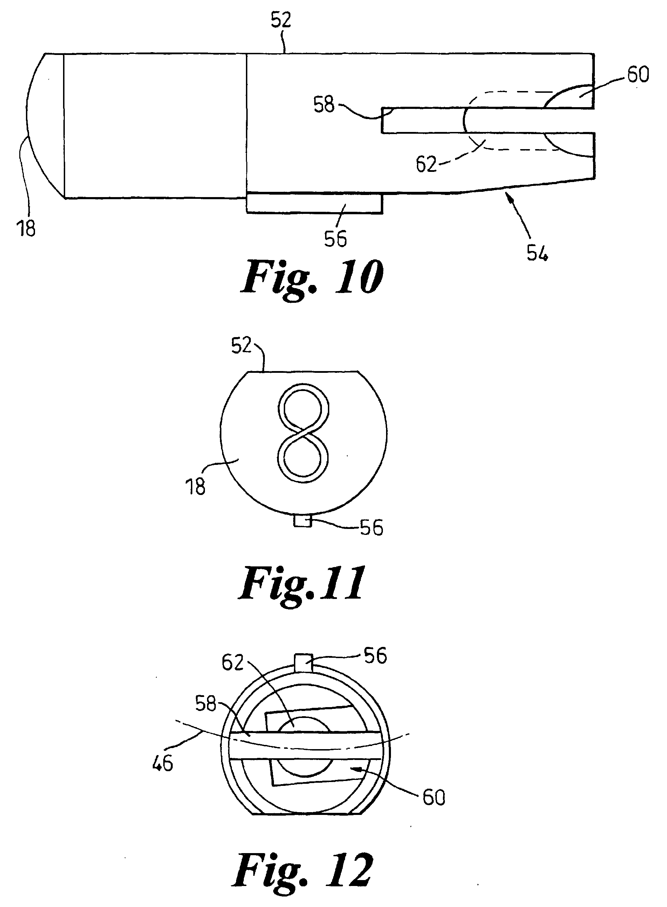

Referring now to Figures 10, 11 and 12, the pick-up peg 18 is a generally solid cylindrical form with a flattened surface indicated at 52 and its lower portion tapered as shown at 54. The peg carries a registration lug 56 which in use engages the slot 28 in the guide sleeve 24 so that the pick-up peg can only be inserted in the guide sleeve 24 in a particular orientation.

At the lower end of the pick-up peg 18 is a line alignment slot 58 extending about a third of the way up the peg. At the bottom end of the peg is a shot stop recess 60 which, as seen in Figure 12, is open to one side of the pick-up peg 18, and closed on the other side. The shot stop recess 60 is effectively a U-shaped channel closed at one end. The dimensions of the shot stop recess 60 are designed to receive with clearance a split shot of the particular diameter of those stored in the containment region 21. The longitudinal axis of the shot stop recess 60 is aligned at about 5° to the axis of the line alignment slot 58 such that the open end of the slot stop recess 60 generally evenly straddles the trajectory line of the knife edge when the pick-up peg 18 is located in the guide sleeve 24.

A central cylindrical shot gripping bore 62 extends co-axially up the pick-up peg 18, terminating in a hemispherical surface, about half way up the line alignment slot 58. The shot gripping bore 62 is of diameter approximately equal to, or slightly larger than, the diameter of the particular split shot contained in the containment region 21, such that, a split shot entering the shot stop recess 60 and engaging the end thereof may pass into the shot gripping bore 62 by depressing the pick-up peg.

In use, as is apparent from the above, the pick-up peg 18 has two operational longitudinal positions; in the first position, the upper end of the pick-up peg 18 projects well above the surface of the lid 18, as seen in Figure 1 and the lower portion of the peg is held in alignment with the alignment slot 58 straddling the knife edge 46 such that a split shot saddled on the knife edge 18 with its split engaged by the knife edge, and turned in the direction allowed by the pawl/ratchet mechanism enters the shot stop recess 60 through the open end thereof and is prevented from further rotational movement with respect to the pick-up peg by the closed end of the shot stop recess 60. In the depressed position, the pick-up peg moves downwardly over the knife edge and over the split shot saddled thereon such that the split shot passes to the end of the shot gripping bore 62. The pick-up peg may then be withdrawn from the device altogether with the split shot captive in the shot gripping bore 62 with the split therein (previously having been aligned by the knife edge) in exact alignment with the line alignment slot 58. A fishing line may then be offered up and passed into the line alignment slot 58 and pulled into the aligned split in the shot. The angler may then compress the lower end of the pick-up peg 18 manually such that the lower portions thereof define to either side of the line alignment slot may flex, exerting a mechanical leverage effect on the portions of the shot to either side of the split, thereby deforming it around the line to make it captive on the line. The line and the captive shot may then be withdrawn from the pick-up peg and the pick-up peg 18 returned to the device ready for the next time it is required.

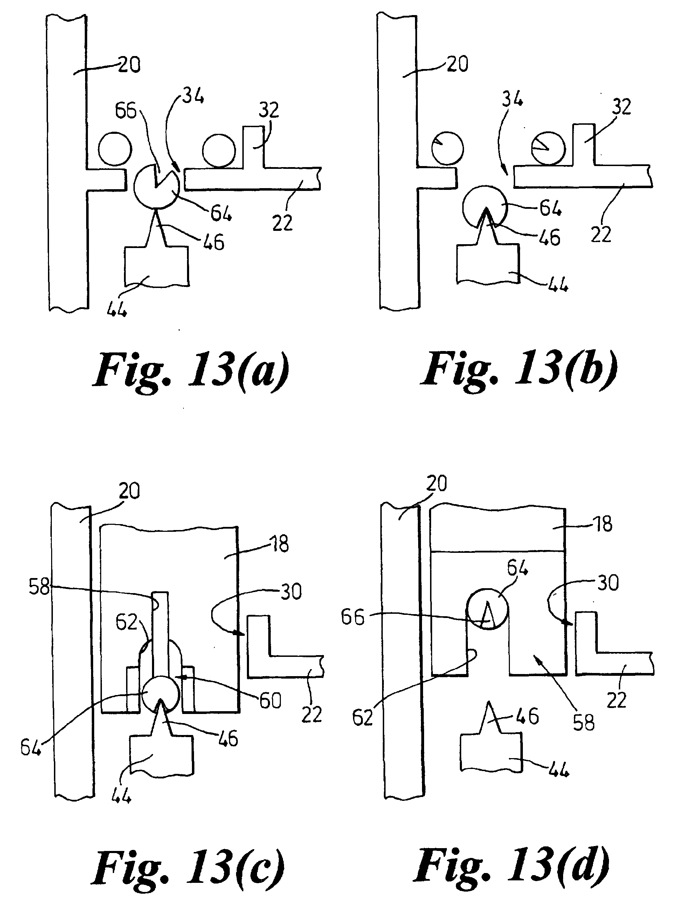

Referring to Figures 13(a) to (d), there is shown schematically the above sequence of operations. Thus initially a split shot 64 with its split 66 randomly oriented falls into the further aperture 58 but is prevented from passing therethrough by the knife edge 46 Figure 13(a). Following vibration of the mechanism by the action of the pawl 50 on the toothed or splined cylindrical collar 36, combined with the essentially linear relative movement in one direction of the knife edge 46, the shot is caused to roll and vibrate in the aperture 38 until the split 66 finds the knife edge and drops onto it with the axis of the split aligned with the axis of the knife edge as shown in Figure 13(b). The geometry of the arrangement is such that once the split of the shot engages the knife edge 46, the shot is low enough to move through the aperture 34 and thus to move with the knife edge towards the aperture 30 through which the lower portion of the pick-up peg 18 projects. The knife edge 46 passes through the shot stop recess 60 which is open towards the direction of arrival of the split shot on the knife edge 46 but prevents the shot from passing beyond the pick-up peg. On further rotation of the knife edge the shot 64 remains stationary, sliding over the knife edge. Depressing the pick-up peg 18 forces the captive shot into the shot gripping bore 62 as shown in Figure 13(d). For clarity of the various passages in the pick-up peg, only the shot gripping bore 62 is seen in Figure 13(d).

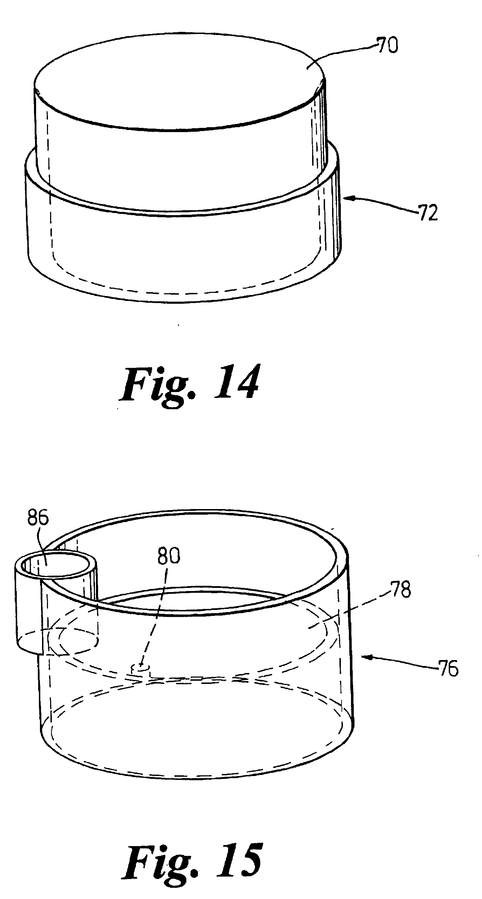

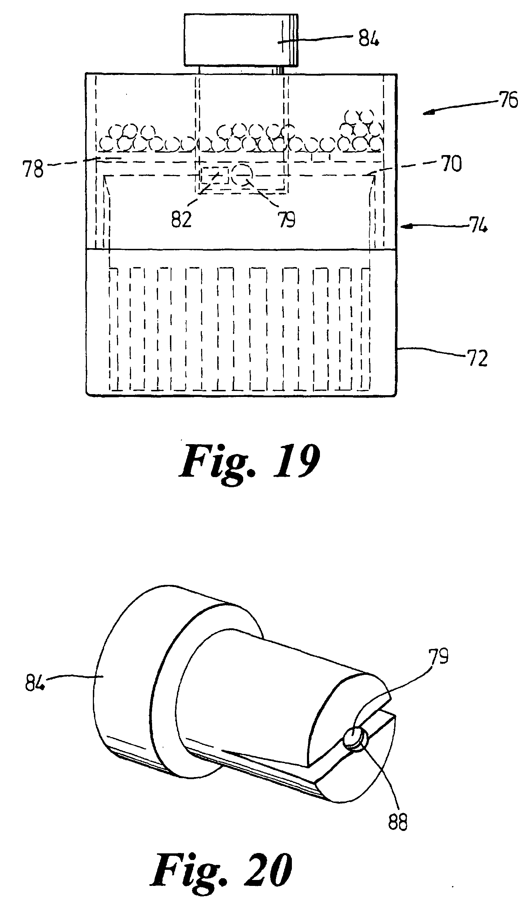

Referring now to the second embodiment of Figures 14 to 23, many components are similar or have similar functions to those described in the first embodiment. The knife edge 70 is circular and part of the bottom half 72 of a pot assembly 74 (Figures 14 and 19). It can revolve relative to the top part 76 of the pot assembly by being manually turned. The top half 76 of the pot (Figure 15), is divided at 78 in such a way that when the pot is assembled, the knife edge 70 runs just beneath the partition 78 with a measurement less than the diameter of the split shot 79 contained in the top portion above this partition 78. A hole 80 in the partition, slightly bigger than the split shot 79, lies above the knife edge 70. Only one shot 79 will fall into this hole when rolled over it, and it will not drop right through this hole because of the knife edge 70 beneath it.

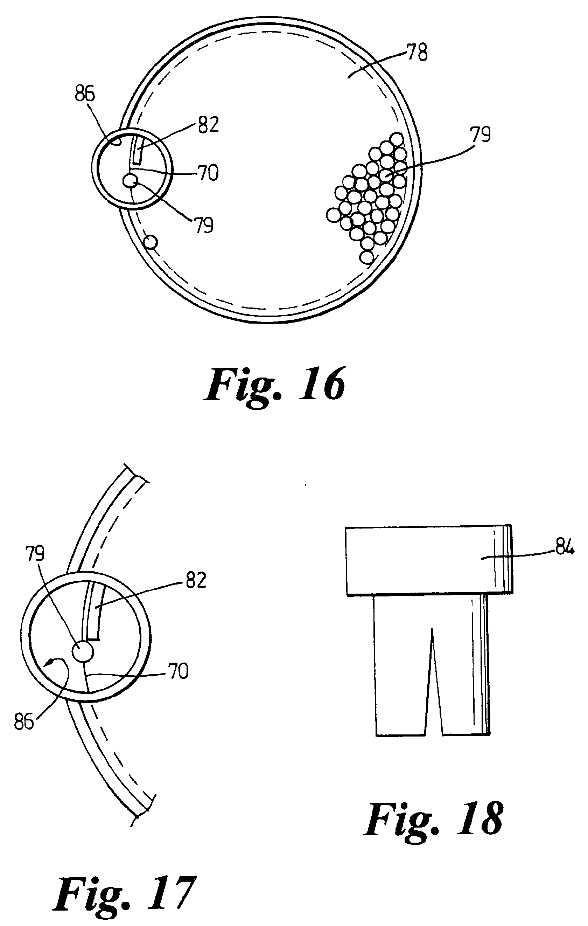

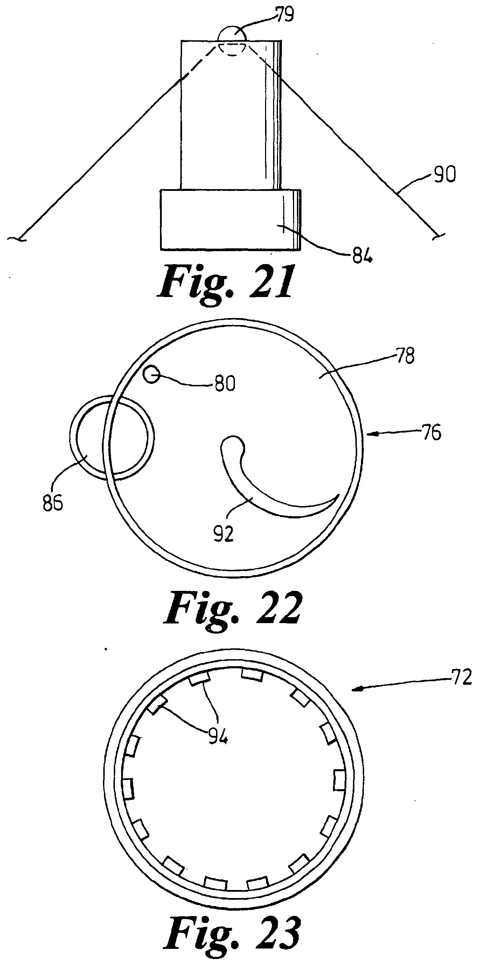

However, when a shot 79 is in this hole 80 and the bottom half 72 of the pot relative to the top half 76, the moving knife edge 70 is turned, and vibration caused by a ratchet system (Figures 22 and 23) causes random turning until by chance, the slot in the shot 79 and the knife edge 70 align. Then the shot drops down onto the knife edge 70 and now is below the partition 78. The shot 79 now moves round with the knife edge 70 (Figure 16).

Finally, the shot 79 hits a shot stop 82 (Figures 16 and 17) and cannot move further. The knife edge 70 continues to move under the shot if the pot is still turned.

Now the shot holder 84 (Figure 18) is inserted into its hole 86 above the shot stop 82 and pushed down over the shot 79, knife edge and shot stops (Figures 19 and 20). The shot 29 is a friction fit in the shot holder 84 and when the latter is removed, the shot 79 comes with it, held in the holder with the shot split 88 aligned ready for the fishing line (Figure 20). The line is inserted into the split shot (Figure 21) and then the shot holder 84 is squeezed between thumb and finger, closing the shot 79 over the line 90 and fixing it there.

Figures 22 and 23 show a simple ratchet system for producing vibration in the pot. Figure 22 is a view of the top half 76 of the pot from below and shows a flexible arm 92, which is formed as part of the plastic moulding that is the pot. Figure 23 is a view of the bottom half 72 of the pot viewed from above. It shows protrusions 94 on the inside of the pot which click past the flexible arm 92.

## Claims

1. A storage and aligner device for split shot (64) of a preset nominal size, having a split (66) therein, said device comprising:
(i) a container (10) for split shot;
(ii) a knife edge (46)of profile capable of being received at least partly within the split (66) of a split shot pellet (64) in use;
(iii) retaining means (34) for retaining in use the split shot pellet (64) in movable relationship adjacent said knife edge (46);
(iv) perturbing means (36,50)for causing in use at least one of vibration of said split shot pellet (64) and relative movement between said split shot pellet (64) and said knife edge (46), sufficient in use to perturb a split shot pellet (64) disposed with its split out of alignment with said knife edge (46) into an aligned position in which said split is aligned with and straddles said knife edge (46), and
(v) means (42) for thereafter presenting said split shot pellet in alignment at a presentation station (30).

2. A storage and aligner device according to Claim 1, wherein said retaining means (34) comprises an alignment aperture (34) in said container (10), said aperture (34) being sized to receive said split shot pellet (64) with clearance, and being positioned generally above said knife edge (46) by a distance such that, when the split (66) on the split shot pellet (64) is aligned with and straddling the knife edge (46), the split shot (64) may pass through and beyond said aperture (34), but when the split (66) on said split shot pellet (64) is not aligned with the knife edge (46), the split shot (64) is retained within said aperture and prevented from passing therethrough by said knife edge (46).

3. A storage and aligner device according to Claim 1 or Claim 2, wherein said perturbing means includes a ratchet or clicker mechanism (36,50) for vibrating in use the split shot (64) in the vicinity of said aperture (34).

4. A storage and aligner device according to Claim 3, wherein at least part (36) of said ratchet or clicker mechanism (36,50) is associated with a portion (14) of said container (10), and a further part (50) thereof is associated with a rotatable member (12) on which said knife edge (46) is provided.

5. A storage and aligner device according to Claim 4, wherein said ratchet or clicker mechanism (36,50) operates to allow rotation of said rotatable member (12) in one direction only.

6. A storage and aligner device according to Claim 4 or Claim 5, wherein said knife edge (46) is generally circular and concentric with the axis of rotation of said rotatable member (12).

7. A storage and aligner device according to any of Claims 4 to 6 when dependent on Claim 2, wherein said presentation station (30) is provided adjacent said knife edge (46) at a location on the downstream path of movement of a split shot (64) in use aligned with and straddling the knife edge (46) as it is carried downstream from said aperture (34).

8. A storage and aligner device according to Claim 7, wherein a removable shot pick-up member (18) is provided at said presentation station (30), said pick-up member (18) having a shot receiving portion (60,62) for being placed in the path of said knife edge (46) and arranged in use to intercept and receive in pre-determined orientation a split shot (64) carried downstream from said alignment aperture (34), said pick-up member (18) being removable in use from said presentation station (30) with the split shot removably received in a predetermined orientation in said pick-up member.

9. A storage and aligner device according to Claim 8, wherein said pick-up member (18) has walls defining a blind shot stop passage or tunnel (60) into which in use a split shot (64) aligned and straddling said knife edge (46) is carried from said alignment aperture (34) on rotation of said rotatable member (12).

10. A storage and aligner device according to Claim 9, wherein said pick-up member (18) includes a line alignment slot (58) which extends up the pick-up member to define two legs which in use engage respective opposite sides of the split shot (64) to either side of the shot split (66), and defining in use a guide to introduce a portion of line into the split (66) of the shot (66).

11. A storage and aligner device according to Claim 9 or Claim 10, wherein said pick-up member (18) has a shot-gripping bore (62) communicating with, but extending generally transversely with respect to, said shot stop passage or tunnel (60), whereby in use a split shot (64) on the knife edge (46) passing towards or reaching the end of the shot stop passage or tunnel (60) may be transferred to and gripped in use by the pick-up member (18) by moving the pick-up member (18) towards the knife edge (46) to force the split shot (64) along the shot gripping bore (60).

12. A storage and aligner device according to any of Claims 8 to 11, wherein said pick-up member (18) is removably received in a non-circular bore (24), thereby to ensure that it is presented to the knife edge (46) in a predetermined angular orientation.

13. A method of aligning split shot for application to a fishing line which comprises:
(i)providing a supply of one or more split shot in a reservoir having a hole or passage through which split shot may pass;
(ii) providing beneath said hole a knife edge;
(iii) moving said knife edge beneath said hole, and
(iv) applying vibration to the shot by means of a clicking ratchet, whereby the shot is rolled and turned until the split in the shot is aligned with and straddles said knife edge, thereby allowing the shot to drop onto said knife edge.
